# EUROPÄISCHE PATENTSCHRIFT

(11) **EP 3 139 534 B1**
(45) Veröffentlichungstag und Bekanntmachung des Hinweises auf die Patenterteilung: **27.02.2019**
(21) Anmeldenummer: 16186600.9
(22) Anmeldetag: 31.08.2016
(51) Int. Cl.: H04L 9/08, H04L 29/06, H04W 12/04

(54) **VERFAHREN ZUR GENERIERUNG EINES DIGITALEN SCHLÜSSELS FÜR SICHERE DRAHTLOSE KOMMUNIKATION**
METHOD FOR GENERATING A DIGITAL KEY FOR SECURE WIRELESS COMMUNICATION
PROCEDE DE GENERATION D'UNE CLE NUMERIQUE POUR LA COMMUNICATION SECURISEE SANS FIL

(30) Priorität: 01.09.2015 DE 102015216706
(43) Veröffentlichungstag der Anmeldung: 08.03.2017
(73) Patentinhaber: Airbus Defence and Space GmbH, 82024 Taufkirchen (DE)
(72) Erfinder: KLAUE, Jirka, 21614 Buxtehude (DE); HELLER, Christoph, 1082 MT Amsterdam (NL); KUBISCH, Martin, 80469 München (DE); STEMMER, Sebastian, 85778 Haimhausen (DE)
(74) Vertreter: Isarpatent

(56) Entgegenhaltungen:
- WO-A2-2006/130725
- US-A1- 2010 067 701
- US-A1- 2012 294 443
- KUI REN ET AL: "Secret key generation exploiting channel characteristics in wireless communications", IEEE WIRELESS COMMUNICATIONS, IEEE SERVICE CENTER, PISCATAWAY, NJ, US, Bd. 18, Nr. 4, 1. August 2011 (2011-08-01) , Seiten 6-12, XP011382142, ISSN: 1536-1284, DOI: 10.1109/MWC.2011.5999759
- BABAK AZIMI-SADJADI ET AL: "Robust key generation from signal envelopes in wireless networks", PROCEEDINGS OF THE 14TH ACM CONFERENCE ON COMPUTER AND COMMUNICATIONS SECURITY, CCS'07, ACM, NEW YORK, NY, USA, 28. Oktober 2007 (2007-10-28), Seiten 401-410, XP058192880, DOI: 10.1145/1315245.1315295 ISBN: 978-1-59593-703-2

## Beschreibung

### Technisches Gebiet

Dieses Dokument betrifft ein Verfahren zur Generierung eines digitalen Schlüssels für sichere drahtlose Kommunikation. Die Offenbarung betrifft insbesondere ein Verfahren zur Generierung eines digitalen Schlüssels, welcher in einem symmetrischen Verschlüsselungsverfahren Anwendung findet.

### Hintergrund

Etablierte symmetrische Verschlüsselungsverfahren erfordern das Vorhandensein eines gemeinsamen Geheimnisses bei den beteiligten Kommunikationsteilnehmern. Dieses gemeinsame Geheimnis wird entweder direkt als Schlüssel benutzt oder der Schlüssel wird davon abgeleitet. Die verschlüsselte Kommunikation gilt dann als sicher, wenn der Schlüssel zufällig und lang genug ist. Bei AES z.B. gelten 128 Bit als lang genug, um das Brechen des Verfahrens aussichtslos erscheinen zu lassen.
Um einen gemeinsamen geheimen Schlüssel den Kommunikationsteilnehmern zur Verfügung zu stellen wird üblicherweise ein asymmetrisches Kryptosystem wie das Diffie-Hellman, RSA oder das Elgamal-Schlüsselaustauschverfahren verwendet. Diese Verfahren sind jedoch anfällig gegen "Man-in-the-middle" Angriffe bzw. erfordern die Existenz einer Infrastruktur mit Vertrauenspunkten. Zusätzlich sind diese Verfahren sehr komplex und erfordern außerdem echte Zufallszahlengeneratoren bei den Kommunikationsteilnehmern. Kleine Geräte wie z.B. eingebettete Sensoren, die verschlüsselt kommunizieren wollen, haben oft weder genug Rechenleistung noch echte physikalische Zufallsquellen.

Eine elegante Methode aus dem Bereich "Physical Layer Security", um gemeinsame geheime Schlüssel für die drahtlose Kommunikation zu erzeugen, ist die Schlüsselgenerierung unter Verwendung der Reziprozität von Multipfad-Kanälen. Dabei wird der geheime Schlüssel direkt aus den Eigenschaften des drahtlosen Kommunikationskanals generiert. In Kui Ren, Hai Su, Qian Wang: "Secret key generation exploiting channel characteristics in wireless communications." Wireless Communications, IEEE , vol.18, no.4, pp.6,12, August 2011 und in Azimi-Sadjadi, Babak, Aggelos Kiayias, Alejandra Mercado, and Bulent Yener. "Robust key generation from signal envelopes in wireless networks." in Proceedings of the 14th ACM conference on Computer and communications security, pp. 401-410. ACM, 2007, werden bekannte Methoden beschrieben, wie aus den zufälligen Eigenschaften eines Funkkanals geheime Schlüssel z.B. für symmetrische Verschlüsselungsverfahren extrahiert werden können.

Voraussetzung dafür ist, dass der drahtlose Kanal reziprok ist, sowie genügend zufällige Eigenschaften hat. Außerdem muss der Kanal stark ortsabhängig sein, in dem Sinne, dass eventuelle Zuhörer in der Nähe der Kommunikationspartner andere physikalische Kanaleigenschaften feststellen bzw. erhalten. Zufällige, also nicht vorhersagbare, physikalische Kanaleigenschaften entstehen zum Beispiel durch Signalüberlagerung aufgrund von Mehrwegeausbreitung. Diese führt am jeweiligen Empfänger zu einem einmaligen Signalmuster, welches zur Erzeugung zufälliger Bits für einen geheimen Schlüssel genutzt werden kann.

Das Dokument WO 2006 / 0 130 725 A2 offenbart geheime Schlüsselgenerierungs- und Authentifizierungsmethoden, die auf gemeinsamer Zufälligkeit beruhen, die nicht von anderen geteilt wird, und bei denen eine eindeutige Kanalantwort zwischen zwei Kommunikationsendgeräten einen geheimen Schlüssel erzeugt wird. Insbesondere werden zusätzliche Zufallsqualitäten auf dem Verbindungskanal mit Hilfe von MIMO-Eigenstrahlformung, Antennenarray-Ablenkung, Polarisationsauswahl, Musterdeformation und Pfadauswahl durch Strahlformung oder Zeitkorrelation erzeugt. Die Dokumente US 2010 / 0 067 701 A1 und die US 2012 / 0 294 443 zeigen weitere Verfahren zum Bestimmen kryptographischer Schlüssel basierend auf Eigenschaften eines Kommunikationskanals.
Es besteht daher ein Bedarf, ein verbessertes Verfahren zur Generierung eines digitalen Schlüssels in zwei Kommunikationsgeräten unter Ausnutzung der Reziprozität des Funkkanals anzugeben.

Diese Aufgabenstellung wird durch die Gegenstände der unabhängigen Ansprüche gelöst. Vorteilhafte Ausführungsformen ergeben sich aus den abhängigen Ansprüchen.

### Zusammenfassung

Die Offenbarung betrifft ein Verfahren zur Generierung eines digitalen Schlüssels in einem ersten Kommunikationsgerät und in einem zweiten Kommunikationsgerät. Dabei überträgt das erste Kommunikationsgerät ein erstes elektromagnetisches Signal an das zweite Kommunikationsgerät, welches den digitalen Schlüssel aus dem empfangenen ersten elektromagnetischen Signal extrahiert. Das zweite Kommunikationsgerät überträgt ein zweites elektromagnetisches Signal an das erste Kommunikationsgerät, welches ebenfalls den digitalen Schlüssel aus dem empfangenen zweiten elektromagnetischen Signal extrahiert. Dabei wird ein direkter Signalanteil des ersten elektromagnetischen Signals und des zweiten elektromagnetischen Signals durch ein Anordnen eines Teils eines Streuobjekts auf dem direkten Signalpfad abgeschwächt, welcher auf einem direkten Signalpfad zwischen dem ersten Kommunikationsgerät und dem zweiten Kommunikationsgerät übertragen wird.

Bei dem ersten oder zweiten Kommunikationsgerät kann es sich um beliebige elektronische Geräte handeln. Das erste oder zweite Kommunikationsgerät ist z.B. ein klassisches Mobiltelefon, ein Smartphone, ein tragbarer Computer wie beispielsweise ein Laptop-Computer, ein Personal Digital Assistant PDA, oder ein Tablet-PC, oder ein sonstiges eingebettetes System. Das erste Kommunikationsgerät und das zweite Kommunikationsgerät müssen nicht notwendigerweise baugleich sein. Voraussetzung ist lediglich, dass beide Kommunikationsgeräte entsprechende Kommunikationsmodule mit einem oder mehreren Antennenelementen aufweisen, die zum Senden und Empfangen von elektromagnetischen Signalen geeignet sind.

Das erste elektromagnetische Signal kann identisch mit dem zweiten elektromagnetischen Signal sein. Alternativ kann es sich aber auch um zwei unterschiedliche elektromagnetische Signale handeln. Des Weiteren können sowohl des erste als auch das zweite elektromagnetische Signal auf der gleichen Trägerfrequenz übertragen werden.

Bei der Modulation der elektromagnetischen Signale können beliebige Modulationsverfahren zur Modulation der Amplitude, Frequenz oder Phase eines Trägersignals zum Einsatz kommen (z.B. Frequency Shift Keying FSK oder Quadrature Phase-Shift Keying QPSK).

Darüber hinaus kann es sich bei den elektromagnetischen Signalen um solche eines bekannten Kommunikationsstandards wie z.B. ein Kommunikationsstandard aus der IEEE 802-Serie handeln (z.B. Wi-Fi IEEE 802.11, ZigBee IEEE 802.15.4, oder Bluetooth IEEE 802.15.1). Dabei wird davon ausgegangen, dass die entsprechenden Kommunikationsmodule der beiden Kommunikationsgeräte den jeweiligen Standard unterstützen.

In dem vorgeschlagenen Verfahren wird folglich der gleiche digitale Schlüssel in beiden Kommunikationsgeräten unabhängig voneinander erzeugt. Voraussetzung hierfür ist z.B. die Reziprozität des Funkkanals zwischen den beiden Kommunikationsgeräten. Die eigentliche Generierung des digitalen Schlüssels umfasst dabei für jedes Kommunikationsgerät zwei Schritte: In einem ersten Schritt wird ein vom jeweils anderen Kommunikationsgerät gesendetes elektromagnetisches Signal durch die Eigenheiten des Funkkanals (wie z.B. Mehrwegeausbreitung, Freiraumdämpfung, Abschattung, Diffraktion oder Absorptionsverluste) verändert und anschließend empfangen. In einem zweiten Schritt extrahiert das Kommunikationsgerät den digitalen Schlüssel aus dem empfangenen elektromagnetischen Signal, insbesondere durch eine Schätzung des Übertragungskanals zwischen den beiden Kommunikationsgeräten und einem Ableiten des Schlüssels aus dem geschätzten Übertragungskanal. Aufgrund der Reziprozität des Kanals können beide Kommunikationsgeräte den Kanal schätzen und kommen dabei mit hinreichender Genauigkeit zu einem gleichen Ergebnis, was es den beiden Kommunikationsgeräten erlaubt, einen gemeinsamen Schlüssel zu bestimmen. Dieser wird zum Beispiel aus den Eigenschaften des geschätzten Kanals abgeleitet. Da der Übertragungskanal zwischen den beiden Kommunikationsgeräten spezifisch für die Anordnung der beiden Kommunikationsgeräte ist, kann er auch nur von diesen bestimmt werden, was die Sicherheit des ermittelten Schlüssels gewährleistet. Weitere Details zur Bestimmung des Schlüssels aus den Kanalparametern finden sich in den eingangs zitierten Veröffentlichungen, die deshalb durch Bezugnahme hier aufgenommen werden.

Das Extrahieren des digitalen Schlüssels kann einen Quantisierungsschritt und/oder eine Fehlerkorrektur beinhalten. In dem Quantisierungsschritt werden empfangene Signalwerte mit einem oder mehrere Schwellwerten verglichen, um eine Bitsequenz zu bestimmen aus der letztlich der digitale Schlüssel berechnet wird. In den eingangs zitierten Veröffentlichungen sind zudem diverse Verfahren zur Fehlerkorrektor beschrieben, die allesamt auf das hier beschriebene Verfahren angewendet werden können. Zu diesem Zwecke werden diese Veröffentlichungen durch Bezugnahme hier aufgenommen.

Wie im Folgenden noch genauer beschrieben wird, kann die Abschwächung des direkten Signalanteils durch das erste oder das zweite Kommunikationsgerät bewirkt werden. Zudem kann ein dritter Gegenstand im direkten Signalpfand angeordnet werden, um die direkte Übertragung eines elektromagnetischen Signals zwischen den beiden Kommunikationsgeräten zu verhindern. In jedem Fall ist aber die Abschwächung für beide Signale gleichmäßig, d.h. das erste elektromagnetische Signal wird auf dem direkten Signalpfad um den gleichen Betrag (ausgedrückt z.B. in Dezibel dB) gedämpft wie das zweite elektromagnetische Signal in umgekehrter Richtung. Mit Abschwächung ist folglich eine Reduktion der empfangenen Signalenergie desjenigen Signalanteils gemeint, welcher auf dem direkten Signalpfad zwischen beiden Geräten übertragen wird.

Durch die Abschwächung des direkten Signalanteils wird die Messung der übrigen Signalanteile am Empfänger vereinfacht, da der störende, dominante Signalteil, welcher auf dem direkten Signalpfad übertragen wird, abgeschwächt ist. Zudem resultiert, wie in den nachfolgenden Ausführungsformen näher beschrieben wird, die Abschwächung des direkten Signalanteils meist in einer Umlenkung bzw. Streuung der elektromagnetischen Signale in die übrigen Raumrichtungen. Durch die Abschwächung des direkten Signalanteils wird somit einerseits der dominante, direkte Signalanteil in der Berechnung des digitalen Schlüssels reduziert, und andererseits die übrigen Signalanteile stärker gewichtet. Die Erzwingung der Mehrwegeausbreitung bewirkt eine diffusere Kanalcharakteristik und somit eine Erhöhung der Entropie d.h. der Zufälligkeit des empfangenen Signals. Die erhöhte Entropie ermöglicht letztendlich eine robustere Generierung der digitalen Schlüssel oder, alternativ, die Bestimmung von sichereren digitalen Schlüsseln mit größeren Bitlängen.

Das Abschwächen des direkten Signalanteils kann dadurch bewirkt werden, dass ein Teil eines Streuobjekts auf dem direkten Signalpfad angeordnet wird. Das Streuobjekt kann beispielsweise einen kegelförmigen oder halbkugelförmigen oder pyramidenförmigen Anteil aufweisen. Diese mechanische Form der Abschwächung bzw. Abschirmung bietet den Vorteil, dass der direkte Signalanteil des ersten elektromagnetischen Signals und des zweiten elektromagnetischen Signals zumindest bei metallischen Streuobjekten fast vollständig eliminiert wird. Hierbei kann das Streuobjekt mechanisch mit dem ersten oder zweiten Kommunikationsgerät verbunden sein. Beispielsweise handelt es sich bei dem Streuobjekt um eine Blende, welche fest oder schwenkbar am ersten oder zweiten Kommunikationsgerät angeordnet ist. Während einer Schlüsselgenerierungsphase kann z.B. eine schwenkbare Blende in den direkten Signalpfad geschwenkt werden, um den direkten Signalanteil der elektromagnetischen Signale abzuschwächen. Nach einer erfolgreichen Schlüsselgenerierung in beiden Kommunikationsgeräten kann in diesem Beispiel das Streuobjekt auf einfache Weise wieder aus dem direkten Signalpfad entfernt werden, um eine energie-effiziente und mit dem digitale Schlüssel verschlüsselte Kommunikation zwischen den beiden Kommunikationsgeräten zu ermöglichen.

Alternativ oder zusätzlich kann das Abschwächen des direkten Signalanteils durch das Anpassen einer Richtcharakteristik einer Antenneneinheit des ersten oder zweiten Kommunikationsgeräts bewirkt werden.

Ganz allgemein beschreibt eine Richtcharakteristik einer Antenne die Winkelabhängigkeit der Stärke empfangener oder gesendeter Wellen. Die Antenneneinheit kann ein oder mehrere Antennenelemente aufweisen. Die Antennenelemente können aktive Antennenelemente oder passive Antennenelemente (sog. parasitäre Antennenelemente) sein. Durch elektronische Ansteuerung der Antennenelemente kann beispielsweise die Richtcharakteristik derart verändert werden, dass die Antenneneinheit nicht mehr omnidirektional in alle Raumrichtungen sendet bzw. empfängt, sondern elektromagnetische Signale aus der bzw. in die Richtung des direkten Signalpfads abschwächt und aus den bzw. in die übrigen Raumrichtungen verstärkt. Dies kann über analoges oder digitales Beamforming erreicht werden. Beispiele für solche Antenneneinheiten können zwei oder mehr Antennenelemente aufweisen, die z.B. in einem Uniform Linear Array (ULA) oder einem Uniform Circular Array (UCA) angeordnet sind.

Das Anpassen der Richtcharakteristik einer Antenneneinheit bietet den Vorteil, dass z.B. die Richtung des direkten Signalpfads elektronisch ermittelt werden kann und der direkte Signalanteil durch Anpassung der Richtcharakteristik gedämpft wird. Nach erfolgreichem Abschluss der Schlüsselgenerierungsphase kann die Richtcharakteristik der Antenneneinheit wiederum geändert werden, um eine energie-effiziente Kommunikation zwischen den beiden Kommunikationsgeräten zu ermöglichen.

Alternativ oder zusätzlich kann der direkte Signalanteil auch durch Verwendung einer Antenneneinheit in einem der Kommunikationsgeräte abgeschwächt werden, welche dauerhaft in gewisse Raumrichtungen sendet und empfängt, während andere Raumrichtungen permanent abgeschwächt werden. Die Richtcharakteristik solcher Richtantennen müssten dann nicht eigens angepasst werden, um den direkten Signalanteil zu dämpfen und die übrigen Signalanteile zu verstärken. Vielmehr müsste eine solche Richtantenne lediglich (z.B. manuell) in Bezug auf das andere Kommunikationsgerät ausgerichtet werden, um den direkten Signalanteil zwischen beiden Kommunikationsgeräten abzuschwächen.

Der digitale Schlüssel kann z.B. aus einer Phase oder einer Amplitude des empfangenen ersten und zweiten elektromagnetischen Signals extrahiert werden.

Vorzugsweise ist ein Zeitintervall zwischen dem Übertragen des ersten elektromagnetischen Signals und dem Übertragen des zweiten elektromagnetischen Signals kleiner ist als eine Kohärenzzeit des Übertragungskanals zwischen dem ersten Kommunikationsgerät und dem zweiten Kommunikationsgerät. Durch diese zeitliche Bedingung kann sichergestellt werden, dass der Kanal reziprok ist und die Korrelation zwischen dem empfangenen ersten elektromagnetischen Signal und dem empfangenen zweiten elektromagnetischen Signal groß genug ist und beide Kommunikationsgeräte tatsächlich den gleichen digitalen Schlüssel extrahieren.

Das erste und das zweite elektromagnetische Signal können eine Sequenz von mindestens zwei unterschiedlichen Signalwerten aufweisen, die nacheinander übertragen werden. Außerdem kann das erste elektromagnetische Signal auf mindestens zwei unterschiedlichen Frequenzen übertragen werden, wenn das zweite elektromagnetische Signal auch auf den gleichen zwei Frequenzen übertragen wird. Der direkte Signalpfad kann eine Sichtverbindung zwischen dem ersten Kommunikationsgerät und dem zweiten Kommunikationsgerät aufweisen.

Die Abschwächung des direkten Signalanteils kann z.B. relativ zu anderen Signalanteilen erfolgen, die nicht auf dem direkten Signalpfad übertragen werden und über Mehrwegeausbreitung zwischen dem ersten und dem zweiten Kommunikationsgerät übertragen werden.

Wie bereits diskutiert kann die Mehrwegeausbreitung dadurch erzwungen werden, das Signalanteile, die nicht auf dem direkten Signalpfad übertragen werden und über Mehrwegeausbreitung zwischen dem ersten und dem zweiten Kommunikationsgerät übertragen werden, verstärkt werden. Dies kann entweder durch die Streuung der elektromagnetischen Signale an dem Streuobjekt oder durch Anpassung der Richtcharakteristik einer Antenneneinheit bewirkt werden.

Ein weiteres offenbartes Kommunikationssystem weist ein erstes Kommunikationsgerät, eine zweites Kommunikationsgerät und ein Streuobjekt auf. Das erste Kommunikationsgerät ist eingerichtet zum Übertragen eines ersten elektromagnetischen Signals von dem ersten Kommunikationsgerät an das zweite Kommunikationsgerät und zum Extrahieren eines digitalen Schlüssels aus einem empfangenen zweiten elektromagnetischen Signal, welches von dem zweiten Kommunikationsgerät übertragen wurde. Umgekehrt ist das zweite Kommunikationsgerät eingerichtet zum Übertragen des zweiten elektromagnetischen Signals an das erste Kommunikationsgerät und zum Extrahieren des digitalen Schlüssels aus dem empfangenen ersten elektromagnetischen Signal. Zumindest ein Teil des Streuobjekts ist auf einem direkten Signalpfad zwischen dem ersten Kommunikationsgerät und dem zweiten Kommunikationsgerät angeordnet, um einen direkten Signalanteil des ersten elektromagnetischen Signals und des zweiten elektromagnetischen Signals auf dem direkten Signalpfad abzuschwächen. Das Streuobjekt kann einen kegelförmigen oder halbkugelförmigen oder pyramidenförmigen Anteil aufweisen.

Gemäß einem weiteren Aspekt kann ein Computerprogrammprodukt mit Computerprogrammmitteln hier vorgesehen sein, die auf einem computerlesbaren Medium speicherbar sein können und von einem Computer ausführbar sein können, wobei die Computerprogrammmittel ausführbare Anweisungen enthalten können, die den Computer dazu veranlassen können, die Schritte gemäß zumindest einem der vorstehend genannten Verfahrensaspekte auszuführen.

Es ist zu beachten, dass die in diesem Dokument beschriebenen Verfahren, Vorrichtungen und Systeme sowohl alleine, als auch in Kombination mit anderen in diesem Dokument beschriebenen Verfahren, Vorrichtungen und Systemen verwendet werden können. Desweiteres können jegliche Aspekte der in diesem Dokument beschriebenen Verfahren, Vorrichtung und Systemen in vielfältiger Weise miteinander kombiniert werden. Insbesondere können die Merkmale der Ansprüche in vielfältiger Weise miteinander kombiniert werden.

### Kurze Beschreibung der Figuren

Die Erfindung wird nachfolgend unter Bezugnahme auf die Zeichnungen näher erläutert; in diesen zeigen:
- Fig. 1: ein beispielhaftes Kommunikationssystem mit einem ersten Kommunikationsgerät und einem zweiten Kommunikationsgerät; und
- Fig. 2: ein verbessertes, beispielhaftes Kommunikationssystem mit einem ersten und einem zweiten Kommunikationsgerät.

### Detaillierte Beschreibung

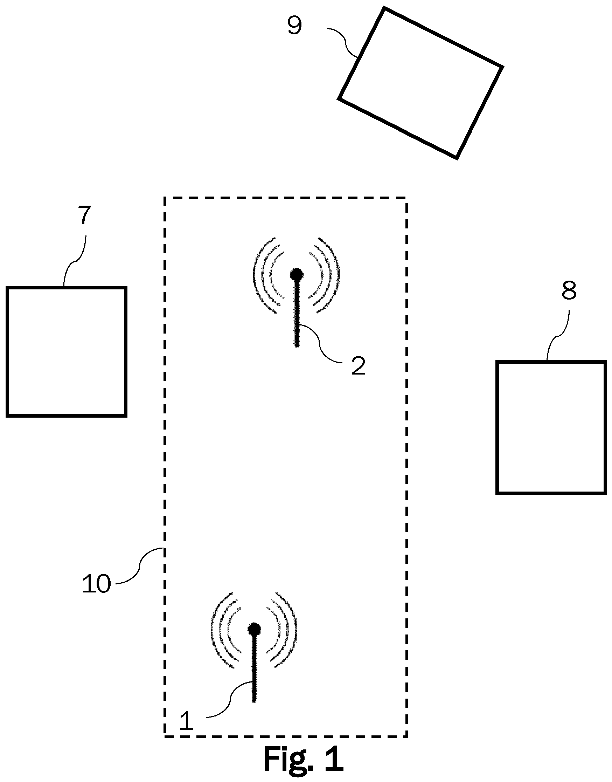

Fig.1 illustriert ein beispielhaftes Kommunikationssystem 10, wie es aus dem Stand der Technik bekannt ist. Zwei Kommunikationsgeräte 1, 2 generieren einen gemeinsamen Schlüssel für sichere drahtlose Kommunikation. Die beiden Kommunikationsgeräte 1, 2 stehen in Sichtverbindung zueinander und ein elektromagnetisches Signal, welches z.B. von Kommunikationsgerät 1 ausgestrahlt wird, erreicht Kommunikationsgerät 2 auf direktem Wege, d.h. über den direkten Signalpfad zwischen Kommunikationsgerät 1 und Kommunikationsgerät 2. Darüber hinaus wird das elektromagnetische Signal von den Hindernissen 7, 8, 9 gestreut bzw. reflektiert. Im Rahmen der Mehrwegeausbreitung erreicht das elektromagnetische Signal Kommunikationsgerät 2 folglich auf verschiedenen Signalpfaden und führt dort zu einem spezifischen Signalmuster, welches zur Generierung eines digitalen Schlüssels genutzt werden kann. Umgekehrt sendet Kommunikationsgerät 2 ein elektromagnetisches Signal an Kommunikationsgerät 1. Die Reziprozität des Funkkanals ermöglicht Kommunikationsgerät 1 die Generierung des gleichen digitalen Schlüssels aus dem von Kommunikationsgerät 2 gesendeten Signal.

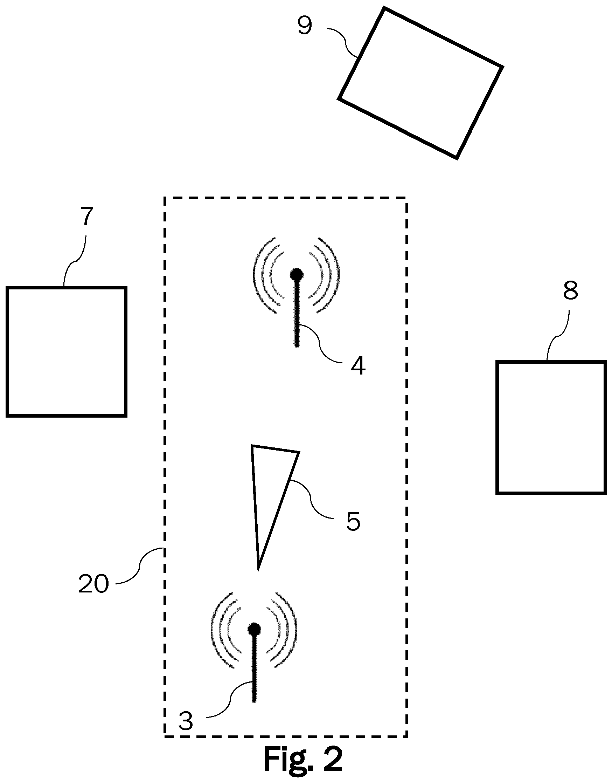

Demgegenüber zeigt Fig. 2 ein verbessertes, beispielhaftes Kommunikationssystem 20 mit den Kommunikationsgeräten 3 und 4 sowie einem Streuobjekt 5, welches beispielhaft in der Nähe des ersten Kommunikationsgeräts 3 angeordnet ist. Zusätzlich findet nun eine Streuung bzw. Reflektion der elektromagnetischen Signale an Streitobjekt 5 statt. Bei Streuobjekt 5 handelt es sich beispielsweise um einen metallischen Reflektor, welcher einen Signalanteil, welcher zuvor auf einem direkten Signalpfad zwischen den beiden Kommunikationsgeräten 1 und 2 übertragen wurde, abschwächt, und alle anderen Signalanteile verstärkt, welche z.B. durch Reflektion an den Hindernissen 7, 8 und 9 über verschiedene Pfade zwischen den beiden Geräten 3 und 4 übertragen werden.

Alternativ oder zusätzlich können eines oder beide der Kommunikationsgeräte 3 und 4 eingerichtet sein, die Mehrwegeausbreitung durch Anpassung der Richtcharakteristik ihrer Antenneneinheiten zu erzwingen und einen direkten Signalanteil abzuschwächen, der sonst entlang der Sichtverbindung zwischen beiden Geräten übertragen werden würde. Auch wenn in Fig. 2 nur ein Antennenelement gezeigt ist, können die beiden Kommunikationsgeräte 3 und 4 auch mehrere Antennenelemente aufweisen, um eine elektronische Strahlenbündelung in gewisse Raumrichtungen zu ermöglichen.

Falls nun eine sichere Verbindung erstellt werden soll, schickt z.B. Kommunikationsgerät 3 eine allgemeine Schlüsselgenerierungsanfrage an Kommunikationsgerät 4, welches dem Kommunikationsgerät 3 als Reaktion auf die Schlüsselgenerierungsanfrage eine Bestätigungsnachricht schickt. Die Bestätigungsnachricht signalisiert dem anfragenden Kommunikationsgerät 3, dass eine gemeinsame Schlüsselgenerierung möglich ist. In der nun anschließenden Schlüsselgenerierungsphase senden jeweils beide Kommunikationsgeräte 3, 4 nacheinander ein geeignetes elektromagnetisches Testsignal und extrahieren daraus den gemeinsamen digitalen Schlüssel.

In einer anschließenden Kommunikationsphase findet eine verschlüsselte Kommunikation unter Verwendung des gemeinsamen digitalen Schlüssels statt. Während dieser Kommunikationsphase wird die Unterdrückung des direkten Signalpfades nicht mehr benötigt und im dargestellten Bespiel wird das Streuobjekt 5 wieder aus dem direkten Signalpfad zwischen den beiden Kommunikationsgeräten 3, 4 entfernt. Im Falle der Unterdrückung des direkten Signalpfades durch Beamforming in einem der Kommunikationsgeräte 3, 4 während der Schlüsselgenerierungsphase kann während der Kommunikationsphase eine omnidirektionale bzw. isotrope Richtcharakteristik der Antenneneinheit verwendet werden, um auch eine Kommunikation über den direkten Signalpfad zu erzielen.

Es ist anzumerken, dass sich die Kommunikationsgeräte 3, 4 während der Schlüsselgenerierungsphase nicht bewegen sollten. In der Kommunikationsphase steht der Mobilität der beiden Kommunikationsgeräte 3, 4 nichts entgegen.

Das beschriebene Verfahren zur Generierung eines digitalen Schlüssels kann in verschiedenen Szenarien Anwendung finden. Vorzugsweise findet die Schlüsselgenerierung in einer geschützten Umgebung statt, um z.B. drahtlose Geräte sicher an ein Netzwerk anzubinden. Diese drahtlosen Geräte können anschließend in einer Kommunikationsphase im gesamten Netzwerkbereich sicher kommunizieren. Ein mögliches Anwendungsszenario ist beispielsweise ein Cockpit in ein Flugzeug oder in einem Hubschrauber. Das beschriebene Verfahren ermöglicht, dass Geräte (beispielsweise in einem Cockpit) auf einfache Weise einen gemeinsamen Schlüssel generieren, den sie anschließend zur sicheren, verschlüsselten Kommunikation nutzen können. Hierzu ist es nur erforderlich, dass sich die Geräte in einer gewissen räumlichen Nähe befinden. Das beschriebene Verfahren schränkt den direkten Signalpfad ein und fördert eine Übertragung mittels Mehrwegeausbreitung, so dass ein Kanal mit zufälligen Eigenschaften entsteht und sichere Bedingungen für die Schlüsselgenerierung mit einem hohen Grad an Zufälligkeit gegeben sind. Ein spezieller Schlüsselaustausch mittels eines anderen Mediums, wie eines digitalen Speichers, ist nicht erforderlich. Andere Geräte, die sich nicht an denselben Orten befinden, finden einen anderen Kanal vor und sind nicht in der Lage den gleichen Schlüssel zu generieren. Das beschriebene Verfahren eignet sich somit insbesondere für kleine Geräte, wie Sensoren, oder Diagnosetools, die gelegentlich eine sichere Datenverbindung mit einem Partner benötigen.

Die vorliegende Erfindung ist nicht auf die gezeigten Ausführungsbeispiele beschränkt. Insbesondere ist zu beachten, dass die Beschreibung und die Figuren nur das Prinzip der vorgeschlagenen Verfahren, Vorrichtungen und Systeme veranschaulichen sollen.

## Patentansprüche

1. Verfahren zur Generierung eines digitalen Schlüssels in einem ersten Kommunikationsgerät und in einem zweiten Kommunikationsgerät, wobei das Verfahren folgende Verfahrensschritte aufweist:
- Übertragen eines ersten elektromagnetischen Signals von dem ersten Kommunikationsgerät an das zweite Kommunikationsgerät;
- Extrahieren des digitalen Schlüssels aus dem empfangenen ersten elektromagnetischen Signal durch das zweite Kommunikationsgerät;
- Übertragen eines zweiten elektromagnetischen Signals von dem zweiten Kommunikationsgerät an das erste Kommunikationsgerät; und
- Extrahieren des digitalen Schlüssels aus dem empfangenen zweiten elektromagnetischen Signal durch das erste Kommunikationsgerät; **gekennzeichnet dadurch dass** ein direkter Signalanteil des ersten elektromagnetischen Signals und des zweiten elektromagnetischen Signals, welcher auf einem direkten Signalpfad zwischen dem ersten Kommunikationsgerät und dem zweiten Kommunikationsgerät übertragen wird, durch ein Anordnen eines Teils eines Streuobjekts, welches schwenkbar am ersten oder zweiten Kommunikationsgerät angeordnet ist, auf dem direkten Signalpfad abgeschwächt wird.

2. Verfahren zur Generierung eines digitalen Schlüssels nach Anspruch 1, wobei das Streuobjekt einen kegelförmigen oder halbkugelförmigen oder pyramidenförmigen Anteil aufweist.

3. Verfahren zur Generierung eines digitalen Schlüssels nach einem der vorhergehenden Ansprüche, wobei der digitale Schlüssel aus einer Phase oder einer Amplitude des empfangenen ersten und zweiten elektromagnetischen Signals extrahiert wird.

4. Verfahren zur Generierung eines digitalen Schlüssels nach einem der vorhergehenden Ansprüche, wobei ein Zeitintervall zwischen dem Übertragen des ersten elektromagnetischen Signals und dem Übertragen des zweiten elektromagnetischen Signals kleiner ist als eine Kohärenzzeit des Übertragungskanals zwischen dem ersten Kommunikationsgerät und dem zweiten Kommunikationsgerät.

5. Verfahren zur Generierung eines digitalen Schlüssels nach einem der vorhergehenden Ansprüche, wobei das erste und das zweite elektromagnetische Signal eine Sequenz von mindestens zwei unterschiedlichen Signalwerten aufweist, die nacheinander übertragen werden.

6. Verfahren zur Generierung eines digitalen Schlüssels nach einem der vorhergehenden Ansprüche, wobei das erste elektromagnetische Signal auf mindestens zwei unterschiedlichen Frequenzen übertragen wird und das zweite elektromagnetische Signal auch auf den mindestens zwei unterschiedlichen Frequenzen übertragen wird.

7. Verfahren zur Generierung eines digitalen Schlüssels nach einem der vorhergehenden Ansprüche, wobei der direkte Signalpfad eine Sichtverbindung zwischen dem ersten Kommunikationsgerät und dem zweiten Kommunikationsgerät ist.

8. Verfahren zur Generierung eines digitalen Schlüssels nach einem der vorhergehenden Ansprüche, wobei der direkte Signalanteil relativ zu anderen Signalanteilen abgeschwächt wird, die nicht auf dem direkten Signalpfad übertragen werden und über Mehrwegeausbreitung zwischen dem ersten und dem zweiten Kommunikationsgerät übertragen werden.

9. Verfahren zur Generierung eines digitalen Schlüssels nach einem der vorhergehenden Ansprüche, wobei Signalanteile, die nicht auf dem direkten Signalpfad übertragen werden und über Mehrwegeausbreitung zwischen dem ersten und dem zweiten Kommunikationsgerät übertragen werden, verstärkt werden.

10. Verfahren zur Generierung eines digitalen Schlüssels nach einem der vorhergehenden Ansprüche, wobei der direkte Signalanteil vollständig unterdrückt wird.

11. Kommunikationssystem mit einem ersten Kommunikationsgerät, einem zweiten Kommunikationsgerät und einem Streuobjekt, wobei das erste Kommunikationsgerät eingerichtet ist zum
- Übertragen eines ersten elektromagnetischen Signals von dem ersten Kommunikationsgerät an das zweite Kommunikationsgerät; und
- Extrahieren eines digitalen Schlüssels aus einem empfangenen zweiten elektromagnetischen Signal, welches von dem zweiten Kommunikationsgerät übertragen wurde; und das zweite Kommunikationsgerät eingerichtet ist zum
- Übertragen des zweiten elektromagnetischen Signals an das erste Kommunikationsgerät;
- Extrahieren des digitalen Schlüssels aus dem empfangenen ersten elektromagnetischen Signal; und **gekennzeichnet dadurch dass** zumindest ein Teil des Streuobjekts, welches schwenkbar am ersten oder zweiten Kommunikationsgerät angeordnet ist, auf einem direkten Signalpfad zwischen dem ersten Kommunikationsgerät und dem zweiten Kommunikationsgerät angeordnet ist, um einen direkten Signalanteil des ersten elektromagnetischen Signals und des zweiten elektromagnetischen Signals auf dem direkten Signalpfad abzuschwächen.

12. Kommunikationssystem nach Anspruch 11, wobei das Streuobjekt einen kegelförmigen oder halbkugelförmigen oder pyramidenförmigen Anteil aufweist.

## Claims

1. Method for generating a digital key in a first communication device and in a second communication device, wherein the method has the following method steps:
- transmitting a first electromagnetic signal from the first communication device to the second communication device;
- extracting the digital key from the received first electromagnetic signal by means of the second communication device;
- transmitting a second electromagnetic signal from the second communication device to the first communication device; and
- extracting the digital key from the received second electromagnetic signal by means of the first communication device;
**characterized in that** a direct signal component of the first electromagnetic signal and of the second electromagnetic signal, transmitted on a direct signal path between the first communication device and the second communication device, is attenuated by arranging a portion of a scattering object, arranged swivelably on the first or second communication device, on the direct signal path.

2. Method for generating a digital key according to Claim 1, wherein the scattering object has a conical or hemispherical or pyramidal component.

3. Method for generating a digital key according to either of the preceding claims, wherein the digital key is extracted from a phase or an amplitude of the received first and second electromagnetic signals.

4. Method for generating a digital key according to one of the preceding claims, wherein a time interval between the transmitting of the first electromagnetic signal and the transmitting of the second electromagnetic signal is shorter than a coherence time of the transmission channel between the first communication device and the second communication device.

5. Method for generating a digital key according to one of the preceding claims, wherein the first and second electromagnetic signals have a sequence of at least two different signal values transmitted in succession.

6. Method for generating a digital key according to one of the preceding claims, wherein the first electromagnetic signal is transmitted on at least two different frequencies and the second electromagnetic signal is also transmitted on the at least two different frequencies.

7. Method for generating a digital key according to one of the preceding claims, wherein the direct signal path is a line of sight between the first communication device and the second communication device.

8. Method for generating a digital key according to one of the preceding claims, wherein the direct signal component is attenuated relative to other signal components that are not transmitted on the direct signal path and are transmitted by means of multipath propagation between the first and second communication devices.

9. Method for generating a digital key according to one of the preceding claims, wherein signal components that are not transmitted on the direct signal path and are transmitted by means of multipath propagation between the first and second communication devices are amplified.

10. Method for generating a digital key according to one of the preceding claims, wherein the direct signal component is rejected completely.

11. Communication system having a first communication device, a second communication device and a scattering object, wherein the first communication device is configured for
- transmitting a first electromagnetic signal from the first communication device to the second communication device; and
- extracting a digital key from a received second electromagnetic signal that has been transmitted by the second communication device;
and the second communication device is configured for
- transmitting the second electromagnetic signal to the first communication device;
- extracting the digital key from the received first electromagnetic signal; and **characterized in that** at least one portion of the scattering object, arranged swivelably on the first or second communication device, is arranged on a direct signal path between the first communication device and the second communication device in order to attenuate a direct signal component of the first electromagnetic signal and of the second electromagnetic signal on the direct signal path.

12. Communication system according to Claim 11, wherein the scattering object has a conical or hemispherical or pyramidal component.

## Revendications

1. Procédé pour générer une clé numérique dans un premier appareil de communication et dans un deuxième appareil de communication, le procédé comprenant les étapes suivantes :
- transmission d'un premier signal électromagnétique du premier appareil de communication au deuxième appareil de communication ;
- extraction de la clé numérique du premier signal électromagnétique reçu par le deuxième appareil de communication ;
- transmission d'un deuxième signal électromagnétique du deuxième appareil de communication au premier appareil de communication ; et
- extraction de la clé numérique du deuxième signal électromagnétique reçu par le premier appareil de communication ;
**caractérisé en ce que**
une part de signal directe du premier signal électromagnétique et du deuxième signal électromagnétique, laquelle est transmise sur un trajet de signal direct entre le premier appareil de communication et le deuxième appareil de communication, est atténuée par un arrangement sur le trajet de signal direct d'une partie d'un objet diffuseur qui est monté pivotant sur le premier ou le deuxième appareil de communication.

2. Procédé pour générer une clé numérique selon la revendication 1, l'objet diffuseur possédant une part conique ou hémisphérique ou pyramidale.

3. Procédé pour générer une clé numérique selon l'une des revendications précédentes, la clé numérique étant extraite d'une phase ou d'une amplitude des premier et deuxième signaux électromagnétiques reçus.

4. Procédé pour générer une clé numérique selon l'une des revendications précédentes, un intervalle de temps entre la transmission du premier signal électromagnétique et la transmission du deuxième signal électromagnétique étant inférieur à un temps de cohérence du canal de transmission entre le premier appareil de communication et le deuxième appareil de communication.

5. Procédé pour générer une clé numérique selon l'une des revendications précédentes, le premier et le deuxième signal électromagnétique possédant une séquence d'au moins deux valeurs de signal différentes qui sont transmises l'une après l'autre.

6. Procédé pour générer une clé numérique selon l'une des revendications précédentes, le premier signal électromagnétique étant transmis sur au moins deux fréquences différentes et le deuxième signal électromagnétique étant transmis sur les au moins deux fréquences différentes.

7. Procédé pour générer une clé numérique selon l'une des revendications précédentes, le trajet de signal direct étant un contact visuel entre le premier appareil de communication et le deuxième appareil de communication.

8. Procédé pour générer une clé numérique selon l'une des revendications précédentes, la part de signal directe étant atténuée par rapport à d'autres parts de signal qui ne sont pas transmises sur le trajet de signal direct et sont transmises par le biais d'une propagation par trajets multiples entre le premier et le deuxième appareil de communication.

9. Procédé pour générer une clé numérique selon l'une des revendications précédentes, les parts de signal qui ne sont pas transmises sur le trajet de signal direct et qui sont transmises par le biais d'une propagation par trajets multiples entre le premier et le deuxième appareil de communication étant amplifiées.

10. Procédé pour générer une clé numérique selon l'une des revendications précédentes, la part de signal directe étant entièrement inhibée.

11. Système de communication comprenant un premier appareil de communication, un deuxième appareil de communication et un objet diffuseur, le premier appareil de communication étant conçu pour
- transmettre un premier signal électromagnétique du premier appareil de communication au deuxième appareil de communication ; et
- extraire une clé numérique d'un deuxième signal électromagnétique reçu, qui a été transmis par le deuxième appareil de communication ;
et le deuxième appareil de communication étant conçu pour
- transmettre le deuxième signal électromagnétique au premier appareil de communication ;
- extraire la clé numérique du premier signal électromagnétique reçu ; et
**caractérisé en ce que**
au moins une partie de l'objet diffuseur, qui est monté pivotant sur le premier ou le deuxième appareil de communication, est arrangée sur un trajet de signal direct entre le premier appareil de communication et le deuxième appareil de communication afin d'atténuer une part de signal directe du premier signal électromagnétique et du deuxième signal électromagnétique sur le trajet de signal direct.

12. Système de communication selon la revendication 11, l'objet diffuseur possédant une part conique ou hémisphérique ou pyramidale.
